Europäisches Patentamt

European Patent Office

Office européen des brevets

(11) Veröffentlichungsnummer : **0 100 056**
**B1**

(12) EUROPÄISCHE PATENTSCHRIFT

(45) Veröffentlichungstag der Patentschrift :
10.09.86

(51) Int. Cl.⁴ : **A 22 C 13/00**

(21) Anmeldenummer : **83107056.0**

(22) Anmeldetag : **19.07.83**

(54) Schlauchförmige Lebensmittelhülle, insbesondere Wursthülle.

(30) Priorität : **27.07.82 DE 3227920**

(43) Veröffentlichungstag der Anmeldung :
**08.02.84 Patentblatt 84/06**

(45) Bekanntmachung des Hinweises auf die Patenterteilung : **10.09.86 Patentblatt 86/37**

(84) Benannte Vertragsstaaten :
**AT BE CH DE FR GB IT LI LU NL SE**

(56) Entgegenhaltungen :
**EP-A- 0 001 545**
**EP-A- 0 008 646**
**DE-A- 2 416 129**
**US-A- 4 211 596**

(73) Patentinhaber : **HOECHST AKTIENGESELLSCHAFT**
**Postfach 80 03 20**
**D-6230 Frankfurt am Main 80 (DE)**

(72) Erfinder : **Hammer, Klaus-Dieter, Dr.**
**An der Hasenquelle 25**
**D-6500 Mainz 1 (DE)**
Erfinder : **Winter, Hermann**
**Am Schlosspark 93**
**D-6200 Wiesbaden (DE)**

## Beschreibung

Die Erfindung bezieht sich auf eine gas-, wasserdampf- und rauchdurchlässige, zur Besiedlung mit Edelschimmel geeignete, schlauchförmige Lebensmittelhülle auf Basis von vorzugsweise faserverstärkter Cellulose, insbesondere Wursthülle, die zur Verbesserung ihrer Resistenz gegen Abbau der Cellulose durch Cellulasen oder andere cellulytische Enzyme mit einem Kunststoffüberzug versehen ist, auf ein Verfahren zu ihrer Herstellung und ihre Verwendung zur Herstellung von Würsten vom Trockenwurst-, Dauerwurst- und Rohwurst-Typ.

Schlauchförmige Lebensmittelhüllen auf Basis von faserverstärkter Cellulose werden bekanntlich zur Verpackung von verarbeiteten Fleischprodukten, wie z. B. Wurstmassen oder Geflügelschnitzel, aber auch von Molkereiprodukten wie Käserollen verwendet. Üblicherweise bestehen diese Lebensmittelhüllen, die auch als Faserstoffhüllen bezeichnet werden, aus einer Faserstoffbahn, z. B. Papierbahn, welche zu einem Schlauch geformt ist, und einem Überzug auf Basis von Cellulose, der insbesondere durch Auftragen von Viskose auf den Faserstoff und anschließender Fällung und Regenerierung zu Cellulosehydrat hergestellt wird.

Die verschiedenen Sorten von Wurstprodukten erfordern Hüllen mit unterschiedlichen Eigenschaften. So werden z. B. als Trockenwurst, Dauerwurst oder Rohwurst bekannte Wursttypen, wie Salami und Cervelatwurst, zur Haltbarmachung durch Trocknen und gegebenenfalls Räuchern behandelt, und erfordern daher Hüllen, die für Gase, Wasserdampf und Rauch durchlässig sind.

Es gibt nun höherwertige Sorten von diesen Trocken-, Dauer- und Rohwürsten, die nach dem Naturreife-Verfahren hergestellt werden und auf der Außenseite der Cellulosehülle mit Edelschimmel besiedelt sind. Bei diesem Verfahren werden die Würste zur Haltbarmachung längere Zeit an der Luft getrocknet, wobei Lagerzeiten von 2 oder 3 Monaten oder länger üblich sind. Für die Produktion von Wurstsorten nach dem naturreife-Verfahren ist deshalb für die Wursthülle eine besonders hohe Durchlässigkeit für Wasserdampf und gute Atmungsaktivität erforderlich. Die bei dem Naturreife-Verfahren erforderlichen langen Lagerzeiten bringen jedoch Probleme mit sich. Der Edelschimmel sondert Cellulase und andere cellulytische Enzyme ab. Diese Enzyme zersetzen die Cellulosehülle mit zunehmender Lagerzeit. Dadurch wird die Cellulosehülle brüchig und läßt sich, besonders am Ende der Lagerzeit, nicht mehr ohne abzureißen von der Wurstmasse abziehen.

Dieses Problem soll nach der US-A-3 935 320 dadurch gelöst werden, daß notwendigerweise auf beiden Seiten der Hülle ein festhaftender Überzug aus einem gehärteten, kationischen Harz vorhanden ist, welches beispielsweise ein Reaktionsprodukt von Epichlorhydrin mit einem Polyamid ist.

Auch die mit diesem Harz beidseitig beschichteten Hüllen neigen allerdings zur Versprödung. Insbesondere besteht beim Raffen dieser Hüllen zu Raupen, d. h. zu gerafften Schläuchen, welche auf automatischen Abfüllmaschinen z. B. mit Wurstmasse gestopft werden, die Gefahr, daß Risse in den Harzschichten auftreten, durch welche die cellulytischen Enzyme der Schimmelpilze mit der Cellulose in Kontakt treten und die Cellulose allmählich zersetzen.

Der vorliegenden Erfindung liegt die Aufgabe zugrunde, eine speziell für diese Wurstsorten geeignete, d. h. gas-, wasserdampf- und rauchdurchlässige und mit Edelschimmel besiedelbare, schlauchförmige Lebensmittelhülle auf Basis von Cellulose zu schaffen, die auch nach relativ starker mechanischer Beanspruchung ihrer Oberfläche, insbesondere durch das maschinelle Raffen zu Raupen, welche auf automatischen Stopfmaschinen verwendet werden können, eine dauerhafte Resistenz gegen den Abbau des Cellulosematerials durch Cellulasen und andere durch Edelschimmelpilze erzeugte cellulytische, enzymatische Verbindungen zeigt und folglich zur Herstellung dieser Würste, die auf ihrer Außenseite einen Edelschimmelüberzug aufweisen und vor dem Verzehr mehrere Monate gelagert werden, besonders geeignet sind.

Gelöst wird diese Aufgabe durch die schlauchförmige Lebensmittelhülle mit den in Anspruch 1 genannten Merkmalen, durch das Verfahren nach Anspruch 9 und die in Anspruch 10 angegebene Verwendung. Die Unteransprüche 2 bis 8 nennen bevorzugte Ausführungsformen der Lebensmittelhülle nach Anspruch 1.

Eine schlauchförmige Lebensmittelhülle auf Basis von bevorzugt faserverstärkter Cellulose mit dem in Anspruch 1 angegebenen Kunststoffüberzug ist zwar bereits beschrieben worden (US-A-4 287 217). Dieser Kunststoffüberzug, der auch Wachse enthalten kann, zeigt vorzugsweise eine Dicke von 1 bis 5 g und wird in bevorzugt 2 bis 20 gew.-%iger wäßriger Dispersion auf die Schlauchaußenseite aufgebracht, wobei der Schlauch zuvor mit einer haftvermittelnden Schicht versehen worden ist.

Der Schlauch befindet sich beim Auftrag der Dispersion allerdings nicht mehr im Gelzustand, da er zum Verfestigen der haftvermittelnden Schicht vorher bereits getrocknet werden mußte. Außerdem zeigt diese bekannte Hülle auf ihrer Innenseite einen Filmüberzug, der wasser- und wasserdampfundurchlässig ist und schon aus diesem Grund für Trocken-, Dauer- oder Rohwurst völlig ungeeignet ist. Das Entfernen der Feuchtigkeit und das Räuchern, der Wurstmasse in dieser Hülle ist nicht möglich. Schließlich dient der Kunststoffüberzug auf der Außenseite bei der bekannten Wursthülle zur Herabsetzung ihrer Stoßempfindlichkeit und ihrer unerwünschten Neigung, beim Anschneiden stark ein- und weiterzureißen. Eine Anregung in Richtung auf das vorliegende Patentbegehren, dessen Besonderheit darin liegt, das Problem der Zersetzung von Cellulose durch cellulytische Enzyme zu lösen, kann diese Druckschrift jedenfalls nicht geben. Insbesondere ist es nicht vorhersehbar, daß Edelschimmel auf einer Cellulosehülle mit Kunststoffüberzug auf der Außenseite einwandfrei haften und sogar gedeihen kann, da Kunststoffe häufig fungicide Wirkung zeigen. Es ist deshalb sogar überraschend, daß eine Besiedlung mit Edelschimmel auf diesem Material überhaupt möglich ist.

Nach der Erfindung wird das Copolymere auf der äußeren Oberfläche der schlauchförmigen Lebensmittelhülle als Überzug aufgebracht. Die Auftragsmenge, in der der Überzug aufgebracht wird, wird so bemessen, daß die Eigenschaften der Hülle nicht nachteilig beeinflußt werden. Insbesondere soll die gute Rauch-, Wasser- und Gasdurchlässigkeit des Cellulosematerials im wesentlichen keinen Veränderungen unterliegen. Auch soll das Wachstum der Edelschimmelkulturen auf der Außenseite der Hülle durch das Aufbringen des Copolymeren nicht behindert werden.

Dieses Ergebnis wird überraschenderweise erreicht mit einer vergleichsweise sehr geringen Auftragsmenge entsprechend einem Flächengewicht von nur 80 bis weniger als 500 mg Copolymeren pro m$^2$ Hüllenmaterial, vorzugsweise von 150 bis 400 mg/m$^2$.

Gewöhnlich geschieht das Auftragen des Überzuges dadurch, daß die Hüllen bei ihrer Herstellung, bevorzugt vor dem Trocknen, d. h. im Gelzustand, durch Bäder geführt werden, in denen das Copolymere in wäßriger Dispersion vorliegt und die man als Ausrüstungsflotte bezeichnet. Die Herstellung des Überzugs· kann aber auch durch Bestreichen oder Besprühen der Hüllen mit wäßriger Dispersion und anschließendes Trocknen erfolgen.

Die schlauchförmigen Hüllen aus faserverstärkten Celluloseschläuchen können nach bekannten Verfahren z. B. aus mit Viskose beschichtetem Papier hergestellt werden. Sie werden im Gelzustand, d. h. nach dem Fällen der Viskose und Regenerieren und vor dem Trocknen, mit der wäßrigen· Dispersion behandelt, insbesondere durch die Ausrüstungsflotte geführt und danach im aufgeblasenen Zustand bei erhöhten Temperaturen, gewöhnlich zwischen 90° und 140 °C, unter Bildung von Cellulosehydrat und Verdampfen der flüssigen Anteile in der Beschichtung und im Trägermaterial getrocknet. Anschließend werden sie gegebenenfalls mit Wasser besprüht, um den für die Weiterarbeitung erforderlichen Feuchtigkeitsgehalt von größer als 7 % zu erreichen.

Die Konzentration des Copolymeren in der wäßrigen Dispersion liegt dabei im Bereich von 0,8 bis weniger als 5 Gew.-%, vorzugsweise von 1,5 bis 4 Gew.-% Kunststoff, bezogen auf die Gesamtmenge an Dispersion.

Als elastische, klebefreie, statistische Copolymere auf basis von hydrophilen Vinylmonomeren sind vorzugsweise die in den Ansprüchen 2 und 3 genannten Copolymeren geeignet. Besonders vorteilhaft sind Vinylalkoholester mit einem Säurerest von 2 bis 20, insbesondere 2 bis 10 C-Atomen, sowie Acrylate und Methacrylate mit einer Alkoholkomponente mit 2 bis 10, vorzugsweise 2 bis 5 C-Atomen, wie z. B. Ethylacrylat, Propylacrylat, Butylacrylat, Isopropylacrylat, Cyclopentylacrylat, Ethylmethacrylat, Propylmethacrylat, Isopropylmethacrylat, Butylmethacrylat und Isobutylmethacrylat. Ein geringer Zusatz von Acrylsäure oder Methacrylsäure verbessert die Haftung zwischen Copolymerüberzug und Cellulosehülle.

In bevorzugter Ausführungsform umfaßt der Kunststoffuberzug zusätzlich zu den copolymeren ein Wachs. Das verwendete Wachs ist beispielsweise ein pflanzliches Wachs wie Candelilla-, Carnauba- oder Montanwachs, ein tierisches Wachs wie Bienenwachs, ein Mineralwachs wie Polyolefinwachs, welches aus n- und iso-Paraffinen besteht, oder ein synthetisches Wachs, z. B. auf Basis von Oxazolin.

Als besonders geeignet haben sich jedoch Wachse mit funktionellen Gruppen gezeigt, deren Hauptbestandteil aus einem Gemisch von Estern linearer aliphatischer Alkohole mit linearen höheren Fettsäuren besteht, wobei die Kettenlängen der Fettsäuren vorzugsweise zwischen 18 und 34 C-Atomen liegen. Die Alkoholkomponente ist überwiegend ein einwertiger Alkohol ; mehrwertige Alkohole mit freien OH-Gruppen sind nur in geringem Maße vorhanden. Zu den linearen höheren Fettsäuren zählen auch langkettige Hydroxycarbonsäuren und Dicarbonsäuren. Ein solches Wachs ist insbesondere Candelilla-, Carnauba-, Bienen- und Montanwachs.

Ein besonders geeignetes Wachs mit funktionellen Gruppen ist chemisch verändertes Montanwachs, das beispielsweise als sog. « Säurewachs » oder « Esterwachs » im Handel ist und auch als « modifiziertes Montanwachs » bezeichnet wird. Chemisch verändertes Montanwachs wird erhalten durch Oxidation von rohem und entharztem Montanwachs, z. B. mit Chromschwefelsäure. Bei diesem Bleichvorgang werden die schwarzbraunen Harz- und Asphaltstoffe im Wachs abgebaut und entfernt. Die Harz-Wachsalkohol-Ester werden gespalten, die freiwerdenden Wachsalkohole zu Wachssäuren sowie vorhandene Hydroxysäuren und Diole zu Dicarbonsäuren oxidiert. In geringem Maße werden auch die Wachsester hydrolytisch gespalten und in Wachssäuren umgewandelt. Alle diese Säuregruppen dieses « Säurewachses » bzw. dieser « Montanwachssäure » werden dann zur Herstellung von « Esterwachs » bzw. veresterter Montanwachssäure mit ein- oder mehrwertigen Alkoholen verestert, beispielsweise mit Ethylenglykol und 1,3-Butylenglykol (1 : 1) (KPS-Typ, Herst. Hoechst). Nach der Erfindung kann das chemisch veränderte Montanwachs als «·Säurewachs » oder als « Esterwachs » verwendet werden. Das ursprüngliche Wachsgerüst aus langkettigen, aliphatischen Verbindungen bleibt im chemisch veränderten Montanwachs weitgehend erhalten.

Wachse mit funktionellen Gruppen, insbesondere chemisch verändertes Montanwachs, zeigen eine besonders hohe Verbesserung der Verarbeitbarkeit der Lebensmittelhülle aus Cellulose, ohne die geforderten Hülleneigenschaften, wie Durchlässigkeit der Hülle, zu verschlechtern. Ein weiterer Vorteil des Wachszusatzes besteht darin, daß die Hülle während der Lagerung und beim Transport nicht verklebt. Die Wirkung der Wachse könnte damit im Zusammenhang stehen, daß sich die Estereinheiten mit ihren funktionellen Gruppen eventuell an die Celluloseketten anlagern, wobei es zur Bildung von Wasserstoffbrücken zwischen den funktionellen Gruppen der Estereinheiten und der Cellulose kommen kann.

Der Anteil der Wachskomponente ist in der Überzugsmasse und im Überzug im Vergleich mit der Menge an Copolymer sehr gering, wobei dieser Anteil gewöhnlich 0,3 bis 5, insbesondere 0,8 bis 3 Gew.-%, bezogen auf die Gewichtsmenge des gesamten Kunststoffüberzugs auf der Außenseite der Hülle, beträgt.

Gewöhnlich wird das Wachs zusammen mit dem Copolymeren auf die Außenseite der Hülle aufgebracht. Hierzu wird der Dispersion 0,3 bis 5, insbesondere 0,8 bis 3 Gew.-%, bezogen auf das Gesamtgewicht der dispergierten Kunststoffanteile, emulgiertes Wachs zugegeben.

Es ist an sich nicht erforderlich, daß sich auf der Innenseite der Lebensmittelhülle ein Auftrag einer Beschichtung befindet. In vorteilhafter Ausführungsform ist allerdings ein Überzug aus Kunststoff vorhanden, der rauch-, gas- und wasserdampfdurchlässig ist und der das Abschälen der Wursthülle von der Wurstmasse, insbesondere bei Dauerwurstwaren, erleichtert.

Ein besonders geeigneter Innenüberzug ist ein ursprünglich wasserlösliches, durch Einwirkung von Wärme aber gehärtetes und wasserunlösliches, kationisches Harz, insbesondere auf Basis von Eiweiß(Casein)-Formaldehyd, Harnstoff-Formaldehyd oder Melamin-Formaldehyd oder von einem Kondensationsprodukt von aliphatischem Polyamin oder Polyamid oder von Polyaminpolyamid mit bifunktionellen Halohydrinen oder deren Derivaten wie Epichlorhydrin oder Gemischen aus diesen Harzen. Diese Harze sind beispielsweise aus den US-A-2,616,874, US-A-2,796,362, US-A-2,345,543, US-A-2,573,956, US-A-2,926,154 und US-A-3,378,379 bekannt.

Ein bevorzugtes kationisches Harz ist das Kondensationsprodukt auf Basis von Polyaminpolyamid und Epichlorhydrin. Polyaminpolyamide sind Kondensationsprodukte einer gesättigten, aliphatischen, zweibasischen Säure, die 3 bis 8 C-Atome im Molekül aufweist, mit einem Polyamin, welches mindestens eine sekundäre und zwei primäre Aminogruppen aufweist.

Das kationische Harz wird im noch nicht ausgehärteten, wasserlöslichen Zustand in wäßriger Lösung in an sich bekannter Weise auf die Innenseite der Hülle aufgebracht. Die Hülle befindet sich hierbei im Gelzustand oder im getrockneten und gegebenenfalls angefeuchteten Zustand. Die wäßrige Lösung enthält gewöhnlich 0,3 bis 2,5, insbesondere 0,5 bis 1,2 Gew.-% an Vorkondensat, bezogen auf die Gesamtlösung. Die aufgebrachte Menge an wasserunlöslichem kationischem Harz entspricht einem Flächengewicht von 40 bis 120, insbesondere 50 bis 80 mg/m².

Die auf ihrer Außenseite mit dem erfindungsgemäßen Kunststoffüberzug versehenen Cellulosehydrathüllen zeigen eine dauerhafte Resistenz gegen den Abbau durch von Edelschimmelpilzen gebildete enzymatische Verbindungen, insbesondere auch noch dann, wenn die Hüllen mechanisch gerafft sind. Geraffte Schläuche werden nach vorherigem Wässern, bei Einsatz bereits vorbefeuchteter Hüllen auch ohne vorheriges Wässern, bei der Herstellung von Würsten auf automatischen Stopfmaschinen verwendet. Insbesondere zeigen die gerafften Schläuche auch an solchen Stellen dauerhafte Cellulaseresistenz, die durch den Eingriff der Raffelemente einer besonders starken mechanischen Beanspruchung ausgesetzt waren.

Außerdem besitzen die erfindungsgemäß behandelten Hüllen bezüglich ihrer Rauch-, Wasser- und Gasdurchlässigkeit gute Qualität, so daß auch speziell beim Räuchern von Würsten hervorragende Produkte erhalten werden. Zudem wird das Wachstum von Edelschimmelkulturen auf der Außenseite der Hülle von den Harzen gemäß der Erfindung in keiner Weise unvorteilhaft beeinträchtigt.

Die folgenden Beispiele sollen weiterhin die Vorteile der Erfindung verdeutlichen. Die in den Beispielen verwendeten Edelschimmelkulturen sind: Penicillium nalgiovensis, Penicillium expansum und Debaryomyces kloeckeri. Die im Schlauchinneren aufgebrachte Imprägnierung besteht aus einem Polyamin-Polyamid-Epichlorhydrin-Vorkondensat (®Resamin HW601, Herst. Hoechst), das in einer wäßrigen Lösung mit einer Konzentration von 0,8 bis 1,2 Gew.-% vorliegt, welche in einer Menge von 40 bis 120 mg/m² aufgetragen wird.

Die Feuchtigkeitsgehalte der Schlauchhüllen wurden nach drei Methoden bestimmt, welche bei gleichzeitiger Anwendung zu übereinstimmenden Ergebnissen führten, nämlich Titration nach Karl Fischer, mit einem Feuchtigkeitsmeßgerät « Aqua-Boy » ZP II der Firma Mundinger GmbH und durch gravimetrische Bestimmung nach Trocknung, 3 Stunden bei 105 °C.

Die Menge des Kunststoffüberzuges wurde nach Ablösen des Überzuges mit organischem Lösungsmittel, wie z. B. Essigsäureethylester, Toluol, Tetrahydrofuran oder Dimethylformamid, nach der Differenzmethode gravimetrisch bestimmt.

Die in den Beispielen angewendeten Lagerbedingungen für Rohwurst sind: Temperatur 12 bis 14 °C, rel. Luftfeuchtigkeit 70-85 %.

Die Lagerdauer für die Lufttrocknung beträgt mehrere Monate, wobei infolge Wasserabgabe aus der Wurstmasse ein Gewichtsverlust von 25 bis 30 % auftritt. Alle Prozentwerte sind, soweit nichts anderes vermerkt wird, in Gew.-% angegeben.

Beispiel 1

Ein aus Viskose durch Fällen und Regenerieren hergestellter Schlauch mit Faserpapiereinlage (60 mm Durchmesser) wird im Gelzustand, d. h. noch vor dem Einlauf in den Trockner, durch eine Tränkwanne geführt, die eine wäßrige Lösung folgender Zusammensetzung enthält :

6,0 Vol.-% einer 50 %igen Dispersion eines statistischen Copolymeren mit 1 % Acrylsäure und 99 % isomeren Butylacrylat (®Acronal 500 D, Herst. BASF),
10,0 Vol.-% Glycerin,
0,46 Vol.-% einer 19,4 %igen Wachsemulsion eines Montanesterwachses (KPS-Wachs, Herst. Hoechst).

In das Schlauchinnere wird Imprägnierlösung aus dem oben genannten Vorkondensat eingebracht. Der Schlauch wird dann im aufgeblasenen Zustand getrocknet, wobei das Dispersionsmittel auf der Außenseite entfernt wird und ein Kunststoffüberzug entsteht. Gleichzeitig wird das Vorkondensat auf der Schlauchinnenseite ausgehärtet und bildet eine wasserunlösliche Innenbeschichtung. Zur Einstellung eines Feuchtigkeitsgehaltes des Trägermaterials von 16 bis 18 % wird der Schlauch mit Wasser besprüht und danach oder gleichzeitig zu einer Raupe mit einer üblichen Raffvorrichtung gerafft.

Die Hülle zeigt auf ihrer Außenseite einen Kunststoffüberzug mit einem Flächengewicht von 160 mg/m², auf ihrer Innenseite einen Überzug aus gehärtetem Harz mit einem Flächengewicht von 60 mg/m².

In die so hergestellte Hülle wird Wurstbrät vom Typ Edelsalami gefüllt, die Hülle wird mit Edelschimmel überzogen und unter den angegebenen Bedingungen 3 Monate gelagert. Danach ist kein Cellulasebefall zu beobachten, und die Hüllen lassen sich, ohne ein- oder abzureißen, mühelos von der Wurstmasse entfernen.

Beispiel 2

Ein mit Viskose versehener Faserschlauch wird nach dem Durchlaufen von Fäll- und Regenerierbädern im Gelzustand vor dem Trocknereingang durch eine Tränkwanne geführt, in der sich eine wäßrige Lösung folgender Zusammensetzung befindet :

6,0 Vol.-% einer 50 %igen Dispersion eines Acrylat-Mischpolymeren folgender Zusammensetzung : 2 % Acrylsäure, 90 % Ethylacrylat, 8 % Butylacrylat (®Acronal 200 D, Herst. BASF),
10,0 Vol.-% Glycerin,
0,1 Vol.-% einer 20 %igen Montanwachsemulsion (KPS-Wachs, Herst. Hoechst).

In das Schlauchinnere wird eine 1,1 %ige Imprägnierlösung aus dem oben genannten Vorkondensat gefüllt. Der Schlauch wird bei Temperaturen zwischen 90 und 140 °C getrocknet und zur Einstellung eines Feuchtigkeitsgehaltes von 8 bis 10 % mit Wasser besprüht.

Die so hergestellte Hülle trägt auf ihrer Außenseite einen Kunststoffüberzug mit einem Flächengewicht von 150 mg/m², auf ihrer Innenseite einen Überzug aus gehärtetem Harz mit einem Flächengewicht von 80 mg/M².

In die Hülle wird Wurstbrät vom Typ der ungarischen Edelsalami gefüllt und die Oberfläche wird mit Edelschimmel überzogen. Nach dreimonatiger Lagerung lassen sich die Hüllen, ohne abzureißen, von der Wurstmasse entfernen.

**Patentansprüche**

1. Gas-, wasserdampf- und rauchdurchlässige, mit Edelschimmel besiedelbare, schlauchförmige Lebensmittelhülle auf Basis von bevorzugt faserverstärkter Cellulose, insbesondere Wursthülle, die zur Verbesserung ihrer Resistenz gegen Abbau durch Cellulasen und andere cellulytische Enzyme mit einem Kunststoffüberzug versehen ist, dadurch gekennzeichnet, daß sie auf ihrer Außenseite einen Kunststoffüberzug aufweist, der ein elastisches, klebefreies, statistisches Copolymeres auf Basis von hydrophilen Vinylmonomeren oder ein Gemisch aus diesen Copolymeren umfaßt, wobei das Vinylmonomere die allgemeine Formel $CH_2 = CR^1-X$ hat, in der $R^1$ eine Methylgruppe oder Wasserstoff und X eine ($-O-COR^2$)- oder ($-CO_2R^2$)-Gruppe ist, wobei $R^2$ eine Alkylgruppe mit 2 bis 20, insbesondere 2 bis 10 C-Atomen ist, gegebenenfalls zusammen mit Acrylsäure oder Methacrylsäure als weiteres hydrophiles Vinylmonomer, wobei der Esteranteil mengenmäßig überwiegt und der Säureanteil vorzugsweise 0,1 bis 10 Gew.-%, bezogen auf das Gesamtgewicht des Copolymeren, beträgt, und daß sie gegebenenfalls eine Innenbeschichtung aufweist, die gas-, wasserdampf- und rauchdurchlässig ist.

2. Hülle nach Anspruch 1, dadurch gekennzeichnet, daß das Copolymere aus Acrylsäure und einem oder verschiedenen Acrylsäureestern oder aus Methacrylsäure und einem oder verschiedenen Methacrylsäureestern mit 0,1 bis 10, vorzugsweise höchstens 5, insbesondere höchstens 2, Gew.-% Anteil an freier Säure, bezogen auf das Gesamtgewicht des Copolymeren, besteht, und daß die Alkoholbausteine der Ester 2 bis 10, vorzugsweise 2 bis 5, C-Atome besitzen.

3. Hülle nach Anspruch 2, dadurch gekennzeichnet, daß das Copolymere aus Einheiten von Acrylsäure, Butylacrylat und gegebenenfalls Ethylacrylat mit überwiegendem Ethylacrylatanteil besteht, wobei die Anteile an freier Säure vorzugsweise 0,5 bis 3, insbesondere 1 bis 2 Gew.-%, bezogen auf das Gesamtgewicht des Polymeren, betragen.

4. Hülle nach einem der Ansprüche 1 bis 3, dadurch gekennzeichnet, daß der Überzug aus Copolymeren auf der Außenseite der Hülle ein Flächengewicht von mindestens 0,08 und weniger als 0,5, insbesondere von 0,15 bis 0,4 g/m² aufweist.

5. Hülle nach einem der Ansprüche 1 bis 4, dadurch gekennzeichnet, daß der Überzug aus Copolymeren auf der Außenseite zusätzlich 0,3 bis 5, insbesondere 0,8 bis 3 Gew.-% Wachs, bezogen auf das Gesamtgewicht des Überzuges, umfaßt.

6. Hülle nach Anspruch 5, dadurch gekennzeichnet, daß das Wachs funktionelle Gruppen umfaßt und sein Hauptbestandteil aus einem Gemisch von Estern linear aliphatischer Alkohole mit linearen höheren Fettsäuren besteht, wobei die Kettenlängen der Fettsäuren vorzugsweise zwischen 18 und 34 C-Atomen liegen.

7. Hülle nach Anspruch 6, dadurch gekennzeichnet, daß das Wachs chemisch verändertes Montanwachs umfaßt.

8. Hülle nach einem der Ansprüche 1 bis 7, dadurch gekennzeichnet, daß die Innenbeschichtung ein gehärtetes kationisches Harz, insbesondere auf Basis von Polyamin-Polyamid-Epichlorhydrin, umfaßt.

9. Verfahren zur Herstellung der schlauchförmigen Lebensmittelhülle nach Anspruch 1, bei dem man eine wäßrige Dispersion des elastischen, klebefreien, statistischen Copolymeren nach Anspruch 1 oder ein Gemisch aus diesen Copolymeren auf die Außenseite eines bevorzugt faserverstärkten Schlauches auf Basis von Cellulose aufbringt und diese Beschichtung unter Ausbildung eines Kunststoffüberzugs bei erhöhter Temperatur trocknet, dadurch gekennzeichnet, daß der Auftrag der wäßrigen Dispersion direkt auf die Außenseite des noch im Gelzustand befindlichen Schlauches bei seiner Herstellung aus Viskose erfolgt und die Dispersion das Copolymere in einer Konzentration von 0,8 bis weniger als 5, insbesondere 1,5 bis 4 Gew.-%, bezogen auf das Gesamtgewicht der Dispersion, enthält.

10. Verwendung der Lebensmittelhülle nach einem der Ansprüche 1 bis 8 als Wursthülle zur Herstellung von Würsten wie Trocken-, Dauer- und Rohwurst, die mit Edelschimmelbelag auf der Außenseite der Wursthülle zur Reifung und Lufttrocknung über einen Zeitraum von mindestens 2, insbesondere mindestens 3 Monate gelagert werden.

**Claims**

1. A tubular food casing which is permeable to gas, water-vapour and smoke, in particular a sausage casing, based on a preferably fiber-reinforced cellulose, which is a suitable substrate for a mold overlay and is provided with a synthetic polymeric coating to improve its resistance to degradation by cellulases and other cellulolytic enzymes, wherein the outside surface of the casing carries a synthetic polymeric coating, which comprises an elastic, non-adhesive, random copolymer or copolymer mixture on a basis of hydrophilic vinyl monomers, the vinyl monomer having the general formula $CH_2 = CR^1\text{-}X$, in which $R^1$ denotes a methyl group or a hydrogen atom and X is a $(-OCOR^2)$ or a $(-CO_2R^2)$ group, $R^2$ being an alkyl group having from 2 to 20, particularly from 2 to 10 carbon atoms, optionally together with acrylic acid or methacrylic acid as an additional hydrophilic vinyl monomer, with the ester proportion being quantitatively predominant and the acid proportion preferably ranging from 0.1 to 10 % by weight, based on the total weight of the copolymer and wherein the inside surface of the casing optionally carries a coating, which is permeable to gas, water-vapour and smoke.

2. A casing as claimed in claim 1, wherein the copolymer comprises acrylic acid and at least one acrylate or methacrylic acid and at least one methacrylate, having a proportion of free acid from 0.1 to 10 % by weight, preferably not more than 5 % by weight, particularly not more than 2 % by weight, relative to the total weight of the copolymer and wherein the alcohol units of the esters have from 2 to 10, preferably from 2 to 5, carbon atoms.

3. A casing as claimed in claim 2, wherein the copolymer comprises units of acrylic acid, butyl acrylate and, optionally, ethyl acrylate, in which the proportion of ethyl acrylate is predominant, with the proportions of free acid preferably ranging from 0.5 to 3 % by weight, particularly from 1 to 2 % by weight, relative to the total weight of the polymer.

4. A casing as claimed in any of claims 1 to 3, wherein the copolymer coating on the outside surface of the casing has a weight per unit area of at least 0.08 g/m² and less than 0.5 g/m², particularly of from 0.15 to 0.4 g/m².

5. A casing as claimed in any of claims 1 to 4, wherein the copolymer coating on the outside surface additionally comprises from 0.3 to 5 % by weight, particularly from 0.8 to 3 % by weight of wax, relative to the total weight of the coating.

6. A casing as claimed in claim 5, wherein the wax includes functional groups and has a main constituent comprising a mixture of esters or linear aliphatic alcohols with linear higher-molecular weight fatty acids, with the chain lengths of the fatty acids preferably ranging between 18 and 34 carbon atoms.

7. A casing as claimed in claim 6, wherein the wax comprises a chemically modified montan wax.

8. A casing as claimed in any of claims 1 to 7, wherein the interior coating comprises a cured cationic resin, particularly on a basis of polyamine-polyamide/epichlorohydrin.

9. A process for manufacturing the tubular food casing as claimed in claim 1 comprising applying an aqueous dispersion of the elastic, non-adhesive, random copolymer or copolymer mixture as claimed in claim 1 to the outside surface of a preferably fiber-reinforced tubing based on cellulose and drying this coating at an elevated temperature to form a synthetic polymeric coating, wherein the aqueous dispersion is applied directly to the outside surface of the tubing which is still in the gel state, during the manufacture thereof from viscose, and the dispersion contains the copolymer in a concentration of from 0.8 % by weight to less than 5 % by weight, particularly from 1.5 to 4 % by weight, relative to the total weight of the dispersion.

10. Use of the food casing as claimed in any of claims 1 to 8 as a sausage casing in the production of sausages of the dry, long-keeping and uncooked type, which have a mold overlay on the outside of the sausage casing and are stored for a period of at least 2, particularly at least 3 months, for ripening and air-drying.

**Revendications**

1. Enveloppe tubulaire pour aliments perméable aux gaz, à la vapeur d'eau et à la fumée et pouvant être colonisée par la moisissure noble, à base de cellulose de préférence renforcée par des fibres, en particulier enveloppe pour saucisses, qui est munie d'un revêtement de matière plastique pour améliorer sa résistance à la dégradation par les cellulases et les autres enzymes cellulolytiques, caractérisée en ce qu'elle présente sur sa face externe un revêtement de matière plastique, qui comprend un copolymère statistique élastique non adhésif à base de monomères vinyliques hydrophiles ou un mélange de ces copolymères, le monomère vinylique ayant la formule générale $CH_2 = CR^1\text{-}X$, dans laquelle $R^1$ est un groupe méthyle ou un atome d'hydrogène et X est un groupe $(\text{—OCOR}^2)\text{-}$ ou $(\text{—CO}_2R^2)\text{-}$, $R^2$ étant un groupe alkyle ayant 2 à 20, en particulier 2 à 10 atomes de C, éventuellement avec de l'acide acrylique ou de l'acide méthacrylique comme autre monomère vinylique hydrophile, la proportion d'ester étant prépondérante en quantité et la proportion d'acide étant de préférence de 0,1 à 10 % en poids par rapport au poids total du copolymère, et en ce qu'elle présente le cas échéant un enduit interne qui est perméable au gaz, à la vapeur d'eau et à la fumée.

2. Enveloppe selon la revendication 1, caractérisée en ce que le copolymère est constitué d'acide acrylique et d'un ou plusieurs esters acryliques ou d'acide méthacrylique et d'un ou plusieurs esters méthacryliques, avec une proportion d'acide libre de 0,1 à 10, de préférence de 5 au maximum, en particulier de 2 au maximum % en poids par rapport au poids total du copolymère, et en ce que les composants alcool des esters possèdent 2 à 10, de préférence 2 à 5 atomes de C.

3. Enveloppe selon la revendication 2, caractérisée en ce que le copolymère est constitué de motifs acide acrylique, acrylate de butyle et le cas échéant acrylate d'éthyle, avec une proportion prépondérante d'acrylate d'éthyle, les proportions d'acide libre étant de préférence de 0,5 à 3, en particulier de 1 à 2 % en poids par rapport au poids total du polymère.

4. Enveloppe selon l'une quelconque des revendications 1 à 3, caractérisée en ce que le revêtement de copolymère sur la face externe de l'enveloppe a un poids surfacique allant d'au moins 0,08 à moins de 0,5, en particulier de 0,15 à 0,4 g/m².

5. Enveloppe selon l'une quelconque des revendications 1 à 4, caractérisée en ce que le revêtement de copolymère sur la face externe contient en outre 0,3 à 5, en particulier 0,8 à 3 % en poids de cire par rapport au poids total du revêtement.

6. Enveloppe selon la revendication 5, caractérisée en ce que la cire possède des groupes fonctionnels et que son constituant principal consiste en un mélange d'esters d'alcools aliphatiques linéaires et d'acides gras supérieurs linéaires, les longueurs de chaîne des acides gras étant de préférence comprises entre 18 et 34 atomes de C.

7. Enveloppe selon la revendication 6, caractérisée en ce que la cire comprend de la cire de lignite chimiquement modifiée.

8. Enveloppe selon l'une quelconque des revendications 1 à 7, caractérisée en ce que l'enduit interne comprend une résine cationique durcie, en particulier à base de polyamine-polyamide-épichlorhydrine.

9. Procédé de fabrication de l'enveloppe tubulaire pour aliments selon la revendication 1 dans lequel on applique une dispersion aqueuse du copolymère statistique élastique non adhésif selon la revendication 1 ou un mélange de ces copolymères sur la face externe d'un tube de préférence renforcé par des fibres à base de cellulose et on sèche cet enduit à température relativement élevée avec formation d'un revêtement de matière plastique, caractérisé en ce que l'on applique la dispersion aqueuse directement sur la face externe du tube qui se trouve encore à l'état de gel lors de sa fabrication à partir de viscose et en ce que la dispersion contient le copolymère à une concentration allant de 0,8 à moins de 5, en particulier de 1,5 à 4 % en poids, par rapport au poids total de la dispersion.

10. Emploi de l'enveloppe pour aliments selon l'une quelconque des revendications 1 à 8 comme enveloppe pour saucisses pour la fabrication de saucisses telles que saucisses sèches, saucisses de longue conservation et saucisses crues, qui sont stockées avec un revêtement de moisissure noble sur la face externe de l'enveloppe de la saucisse en vue de la maturation et du séchage à l'air pendant une période d'au moins deux, en particulier d'au moins trois mois.